Europäisches Patentamt

European Patent Office

Office européen des brevets

(19)

(11) Publication number : **0 474 441 A2**

(12) **EUROPEAN PATENT APPLICATION**

(21) Application number : **91307967.9**

(22) Date of filing : **30.08.91**

(51) Int. Cl.⁵ : **F16C 3/02**

(30) Priority : **30.08.90 JP 230306/90**

(43) Date of publication of application :
**11.03.92 Bulletin 92/11**

(84) Designated Contracting States :
**DE FR GB IT SE**

(71) Applicant : **SUMITOMO CHEMICAL COMPANY, LIMITED**
**5-33 Kitahama 4-chome Chuo-ku**
**Osaka-shi Osaka (JP)**

(72) Inventor : **Yamabayashi, Toshiharu**
**2-13-10, Amakubo**
**Tsukuba-shi, Ibaraki (JP)**
Inventor : **Nakazono, Akiko**
**2-40-1, Kasuga**
**Tsukuba-shi, Ibaraki (JP)**
Inventor : **Nakano, Yoshifumi**
**7 Kasuga 3-chome**
**Tsukuba-shi, Ibaraki (JP)**
Inventor : **Yomatsuta, Kohji**
**2-13-1, Umezono**
**Tsukuba-shi, Ibaraki (JP)**

(74) Representative : **Moore, Anthony John et al**
**Gee & Co. Chancery House Chancery Lane**
**London WC2A 1QU (GB)**

(54) **Fiber-reinforced plastics drive shafts.**

(57) A drive shaft comprises a fiber-reinforced plastics pipe (1) and two fittings (2,3) connected to the opposite ends thereof, wherein the ratio ($W_J/W_P$) of the weight ($W_P$) of at least one of the fittings (2,3) to the weight ($W_P$) of the pipe (1) is 2 or less, and the ratio ($A_J/A_P$) of the weight per unit length in the axial direction ($A_J$) of the connecting portion (4) of at least one of the fittings (2,3) to the weight per unit length in the axial direction ($A_P$) of the cylindrical portion of the pipe (1) is from 2 to 8. The drive shaft is lightweight and has improved vibration characteristics in that the amplitude of vibrations (or the displacement amplitude of vibrations in bending mode) decreases gradually with increase in the rotational speed of the shaft.

EP 0 474 441 A2

Jouve, 18, rue Saint-Denis, 75001 PARIS

This invention relates to torque transmitting shafts (hereinafter referred to as "drive shafts") made of fiber reinforced plastics that are suitable for use in torque transmission in, for example, automobiles.

Solid metal rods and metal pipes have conventionally been used as torque transmitting drive shafts. In recent years, the need for reducing the weight of drive shafts has increased and active efforts have been made to develop drive shafts that are made of fiber reinforced plastics (hereinafter sometimes referred to as "FRP"), e.g., resins reinforced with carbon or glass fibers.

For example, various drive shafts having metal fittings joined to FRP pipes have been proposed in JP-B-60-41246, JP-B-59-16125, JP-A-54-159930, JP-A-55-169314 (U.S. patent 4,236,386), JP-A-64-49719 (U.S. patent 4,982,924) and JP-A-62-53373 (U.S. patent 4,451,245). (The term "JP-B" as used herein means an "examined Japanese patent publication", and the term "JP-A" as used herein means an "unexamined published Japanese patent application".)

FRP drive shafts are generally composed of a hollow FRP pipe having a metal fitting connected to each end. Types of fitting include metal yokes, stub shafts and rubber couplings. One problem with FRP drive shafts is that misalignment is prone to occur between an FRP pipe and the fitting connected to each end of the pipe. Another problem is that the connecting portion between the FRP pipe and the fitting is very much heavier than the pipe portion as compared to steel drive shafts, the overall weight balance is poor and satisfactory dynamic balance is difficult to attain. Further, because FRP drive shafts are lighter than steel shafts of the same size, the FRP drive shafts are more prone to vibrate than the steel shafts when the same exciting force is applied.

For the reasons stated above, FRP drive shafts have suffered the problem that the amplitude of vibrations (the displacement amplitude of vibrations in bending mode) is greater at slower rotational speed than in the case of steel drive shafts. The increase in the displacement amplitude of vibrations has been a major obstacle to the efforts to commercialize FRP drive shafts because it greatly impairs one of the characteristic features of FRP, namely, the reduction of vibration and noise.

An object of the present invention is therefore to provide a lightweight drive shaft having improved vibration characteristics in that the amplitude of vibrations (or the displacement amplitude of vibrations in bending mode) decreases gradually, or does not increase, with increase in the rotational speed of the shaft.

The present invention provides a drive shaft made of fiber reinforced plastics (FRP) which comprises an FRP pipe and two fittings joined to the respective ends thereof, wherein the ratio $(W_J/W_p)$ of the weight of at least one of the fittings $(W_J)$ to the weight of the FRP pipe $(W_P)$ is 2 or less, and the ratio $(A_J/A_P)$ of the weight per unit length in the axial direction of the connecting portion of at least one of the fittings $(A_J)$ to the weight per unit length in the axial direction of the cylindrical portion of the FRP pipe $(A_P)$ is from 2 to 8.

In a preferred embodiment of the present invention, the ratio $(L_P/L_J)$ of the length of the FRP pipe $(L_P)$ to the length from the supporting end of the joint to the end of the FRP pipe $(L_J)$ of at least one of the fittings is from 3 to 10, and the ratio $(L_C/D_J)$ of the length of the connecting portion between the fitting and the FRP pipe $(L_C)$ to the inside diameter of the connecting portion of the fitting $(D_J)$ is 1 or less.

In the accompanying drawings

Fig. 1 is a longitudinal section of an FRP drive shaft according to one embodiment of the present invention; and

Fig. 2 is a graph showing the relationship between the rotational speed of the drive shaft and the amount of shaft deflection (amplitude of vibrations, or the displacement amplitude of vibrations in bending mode).

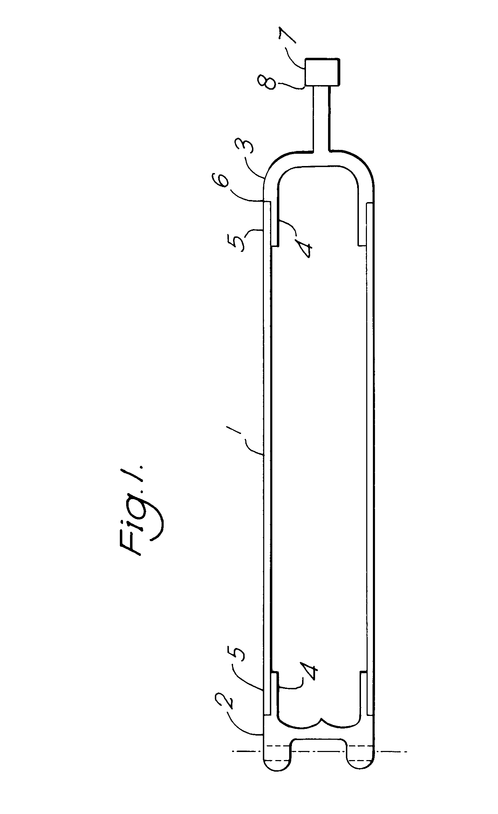

The FRP drive shaft according to the embodiment of the present invention shown in Fig. 1 will now be described. Reference 1 indicates an FRP pipe, 2 a metal yoke fitted to one end of the pipe, and 3 a fitting, which is usually a stub shaft or a rubber coupling, fitted to the other end of the pipe. A stub shaft is shown in Fig. 1 by way of example. The connection portions 4 of the fittings 2,3 and the end portions 5 of the FRP pipe 1 define the regions where the fittings 2,3 engage the FRP pipe 1 to transmit applied torque. Reference 6 indicates "the end of the FRP pipe" as the term is used in the present specification, and the supporting end 8 of the joint 7 of the fitting 3 is located as shown in Fig. 1.

In the case where the fitting 3 is a rubber coupling, the supporting end 8 of the joint 7 of that fitting refers to the distal end of a splined metal shaft inserted into the sleeve of the rubber coupling. The connecting portion of each of the fittings fitted to the FRP pipe may sometimes hereinafter be referred to as the "adapter" of each fitting.

The FRP pipe may receive an adapter having a circular, elliptical or regular polygonal cross-section (perpendicular to the longitudinal axis). The regular polygon may be, for example, a regular hexagon or a regular octagon but is not limited thereto.

In the present specification, the inside diameter of the connecting portion (adapter) of each fitting means the minor axis if the adapter is of an elliptical shape, or the distance between inner opposing surfaces if the adapter is of regular polygonal cross-section.

As already mentioned, the connecting regions between the FRP pipe and the fittings joined thereto are much heavier than the FRP pipe itself. As these connecting regions are subjected to centrifugal force during the rotation of the drive shaft, the vibration of the shaft will generally be increased. In contrast, the FRP drive shaft of the present invention, which satisfies the requirements specified above, has the advantage that when the rotational speed of the shaft increased, the amplitude of its vibrations, or the displacement amplitude of vibrations in bending mode, will hardly change or, in most cases, decrease gradually.

Stated more specifically, if the weight of at least ore of the fittings connected to the FRP pipe is not more than twice, preferably not more than 1.5 times, the weight of the FRP pipe itself, and if the connecting portion of at least one of the fittings is designed to have a weight of from 2 to 8, preferably from 2 to 6, per unit length in the axial direction, assuming that the cylindrical portion of the FRP pipe has a weight of 1 per unit length in the axial direction, the change in the amplitude of vibrations, or the displacement amplitude of vibrations in bending mode, is reduced or hardly changed, despite increased rotational speed of the shaft.

This meritorious effect develops most markedly in the following preferred embodiments of the FRP drive shaft. In one preferred embodiment, the ratio ($L_P/L_J$) of the length of the FRP pipe ($L_P$) to the length from the supporting end 8 of the joint 7 to the end 6 of the FRP pipe ($L_J$) of at least one of the fittings is adjusted to fall within the range of from 3 to 10, preferably from 6 to 10. In another preferred embodiment, the ratio ($L_C/D_J$) of the length of the connecting portion (adapter) of that fitting ($D_J$) is 1 or less.

In still another preferred embodiment, the ratio ($R_J/R_P$) of the sum of the bending stiffness of the connecting portions between the FRP pipe and the fittings in the axial direction ($R_J$) to the bending stiffness of the cylindrical portion of the FRP pipe in the axial direction ($R_P$) is at least 3.

The reinforcing fiber to be used in constructing the drive shaft of the present invention is preferably selected from fibers of high modulus and strength in order to enhance the resonance frequency associated with the rotation of the shaft. The reinforcement fiber is preferably composed of at least one carbon fiber (hereinafter sometimes referred to as "CF"), aramid fiber and ceramic fiber. In order to maximize the effect of weight reduction, fiber having large values of specific strength and specific modulus such as carbon fiber is preferably used but, from the viewpoint of the production cost, the combined use of carbon fiber and glass fiber (hereinafter sometimes referred to as "GF") is also preferred.

Examples of the matrix resin that can be used in the present invention include thermosetting resins such as epoxy resins, unsaturated polyester resins, vinyl ester resins, urethane resins, phenolic resins, alkyd resins, xylene resins, melamine resins, furan resins and silicone resins, and thermoplastic resins such as polyethylene resins, polypropylene resins, polyvinyl chloride resins, polymethylmethacrylate resin, ABS resins, fluorine resins, polycarbonate resins, polyester resins, polyamide resins (e.g., nylon 6, 6/6, 6/10, 6/11 and 6/12), polyphenylene sulfide resins, polysulfone resins, polyether sulfone resins, polyether ether ketone resins and polyphenylene oxide resins. From handling and performance viewpoints, epoxy resins, unsaturated polyester resins and vinyl ester resins are preferred.

The FRP pipe can be fabricated by various known techniques such as a filament winding method and a rolling table method. Metallic yokes, stub shafts (including the adapter) and the adapter of rubber couplings may be made of various alloys such as carbon steels, Cr-containing low-alloy steels, high-alloy steels containing Cr, Ni, Mo, etc., stainless steels, aluminum alloys and titanium alloys.

The following Examples are provided for the purpose of further illustrating the present invention but are in no way to be taken as limiting.

EXAMPLE 1

(1) Fabrication of FRP Pipe

Glass and carbon fibers impregnated with an epoxy resin composition having the formulation indicated below under (A) were processed by a filament winding method to fabricate an FRP pipe that had a cylindrical body with both ends being shaped in a regular octagonal form to permit connection with fittings. The constitution of the FRP layers of the pipe is also indicated below under (B).

(A) Formulation of Epoxy Resin Composition

| | |
|---|---|
| Bisphenol F[1] | 54 parts by weight |
| Triglycidyl-4-amino-m-cresol[2] | 23 parts by weight |
| Neopentyl glycol diglycidyl ether[3] | 23 parts by weight |
| m-Phenylenediamine/diaminodiphenylmethane (60/40)[4] | 28 parts by weight |

Note:

(1) EPICLON® 830 of DAINIPPON INK & CHEMICALS, INC.
(2) SUMI®EPOXY ELM-100 of SUMITOMO CHEMICAL CO., LTD.
(3) 1500 NP of Kyoeisha Oil & Grease Chemical industry Co., Ltd.
(4) TONOX® 60/40 of Uniroyal Chemical Co., Inc.

(B) Constitution of FRP Pipe

Cylindrical body:

    inside(GF90°/±20°CF/90°GF)outside thickness (mm):   0.25 / 2.85 / 0.4

Connecting portion (regular octagonal):

    inside(90°GF/±20°CF/90°GF/90°GF)outside thickness (mm):  0.25 / 2.85 / 3.5 / 0.4

(2) Fabrication of FRP Drive Shaft

The thus-fabricated FRP pipe (weighing 1,300 g) was fitted at one end with a steel yoke having a connecting portion of a regular octagonal shape, and at the other end with a fitting (stub shaft) having a connecting portion of a regular octagonal shape. The connecting portion of the fitting had a length of 50 mm and an inside diameter (the distance between the inner opposing sides) of 65 mm. The fitting was made of steel (S35C) and weighed 1,507 g. To join the fitting, an epoxy adhesive was applied to the mating surfaces and the fitting was press fitted into the FRP pipe.

The weight ratio ($A_J/A_P$), per unit length, of the connecting portion of the fitting ($A_J$) to the cylindrical body of the FRP pipe ($A_P$) was 4, and the ratio ($R_J/R_P$) of the sum of the bending stiffness of the connecting portion of the fitting and the connecting portion of the FRP pipe in the axial direction ($R_J$) respect to the bending stiffness of the cylindrical body of the FRP pipe in the axial direction ($R_P$) was 4. The ratio ($L_P/L_J$) of the total length of the FRP pipe ($L_P$) to the length from the supporting end of the joint of the fitting to the end of the FRP pipe ($L_J$) was 8 as shown in Tables 1 to 4.

(3) Evaluation of FRP Drive Shaft

To compensate for any offset (imbalance) of the center of gravity from the axis of rotation that may have occurred during fabrication, an imbalance measurement was conducted using a dynamic balancer (Model DEL-4CHS of Akashi Seisakusho Co., Ltd.). If any imbalance was detected, the necessary balancing mass was attached to the FRP pipe of the shaft in the position that was one third of the pipe length as measured from both ends.

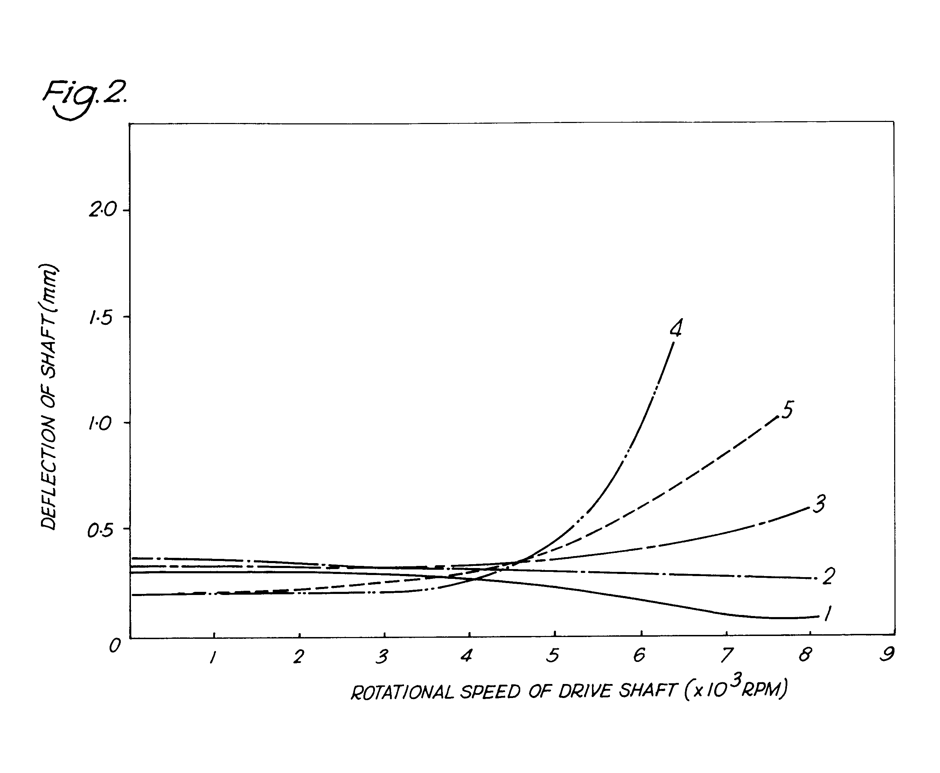

The thus-corrected FRP drive shaft was rotated on a high-speed rotor and the displacement amplitude of vibrations in bending mode during rotation was measured with a non-contact potentiometer. The displacement amplitude of vibrations decreased gradually at a rotational speed of about 3,000 rpm and higher as shown by curve 1 in Fig. 2.

## EXAMPLE 2

An FRP drive shaft having connecting portions in a regular octagonal shape was fabricated using the same constituent materials under the same conditions as in Example 1 except for the dimensions and weight of the FRP pipe and the weight of the stub shaft fitting. The relationships between the dimensions, weight and stiffness of the thus fabricated FRP drive shaft are also shown in Tables 1 to 4.

The FRP drive shaft was subjected to the same evaluation as in Example 1, and it was found that the displacement amplitude of vibrations in bending mode during rotation decreased gradually as shown by curve 2 in Fig. 2.

## EXAMPLE 3

A fitting made of steel (S35C) having a regular octagonal adapter (length of connecting portion: 100 mm, inside diameter: 65 mm) was joined to an FRP pipe of the same type as used in Example 1, whereby an FRP drive shaft was fabricated as shown in Tables 1 to 4. This shaft was subjected to the same test as in Example 1, and it was found that the displacement amplitude of vibrations in bending mode hardly changed up to a rotational speed of about 5,000 rpm but, beyond that point, the displacement amplitude of vibrations had a tendency to increase gradually as shown curve 3 in Fig. 2.

## COMPARATIVE EXAMPLE 1

The FRP pipe used in this Comparative Example had a length of 1,517 mm, an outside diameter of 85 mm, an inside diameter of 80 mm and a wall thickness of 2.5 mm. It also had a cylindrical connecting portion at one end which received a fitting of the rubber coupling type. The fitting weighed 2,476 g and had an adapter (connecting portion) that measured 42 mm, 68 mm and 4 mm in length, inside diameter and wall thickness, respectively. A metal yoke was fitted to the other end of the FRP pipe.

The ratio ($A_J/A_P$) of the weight per unit length of the connecting portion of the fitting (rubber coupling) ($A_J$) to the weight per unit length of the cylindrical body of the FRP pipe ($A_P$) was 11 which was therefore outside the scope of the present invention. The dimensions, weight and other properties of the FRP drive shaft are shown in Tables 1 to 4. The thus-fabricated FRP drive shaft was tested in the same manner as in Example 1, and it was found that when the rotational speed exceeded about 3,500 rpm, the displacement amplitude of vibrations in bending mode increased so markedly that the shaft was barely suitable for practical use at high rotational speeds as shown by curve 4 in Fig. 2.

## COMPARATIVE EXAMPLE 2

An FRP drive shaft was fabricated according to the specifications shown in Tables 1 to 4 by the same method as used in Example 1. One fitting was a metal yoke, the other a rubber coupling which weighed 5,600 g, which was 3.6 times as heavy as the FRP pipe itself. That is, the weight ratio ($W_J/W_P$) of the fitting ($W_J$) to the FRP pipe ($W_P$) was 3.6 which was therefore outside the scope of the present invention. The fabricated FRP drive shaft was tested as in Example 1, and it was found that the displacement amplitude of vibrations in bending mode started to increase gradually at a rotational speed of about 2,000 rpm and the increase was marked beyond 5,000 rpm as shown by curve 5 in Fig. 2.

TABLE 1
Specifications of FRP Pipe

| | FRP pipe | | | | | |
| | | | Cylindrical body | | | |
| | Total weight $W_P$ | Total length $L_P$ | Weight per unit length $A_P$ | Outer diameter/ inner diameter | Wall thick-ness | Bending stiffness $R_P$ |
| | (g) | (mm) | (g/mm) | (mm/mm) | (mm) | ($10^{10}$ N·mm$^2$) |
| Example 1 | 1,300 | 850 | 1.5 | 77/70 | 3.5 | 4.5 |
| Example 2 | 1,200 | 808 | 1.5 | 77/70.6 | 3.2 | 3.0 |
| Example 3 | 1,300 | 850 | 1.5 | 77/70 | 3.5 | 4.5 |
| Comparative Example 1 | 1,368 | 1,517 | 0.9 | 85/80 | 2.5 | 4.6 |
| Comparative Example 2 | 1,550 | 1,100 | 1.4 | 77/70 | 3.5 | 5.4 |

TABLE 2
Specifications of Fitting (Stub Shaft or Rubber
Coupling) and its Connecting Portion

| | | Fitting | | | | Connecting portion between fitting and FRP pipe | |
| | | | Connecting portion (adapter) | | | | |
| | Total weight $W_J$ | Length from supporting end the of pipe $L_J$ | Weight per unit length $A_J$ | Inner diameter $D_J$ | Wall thickness | Length of connecting portion $L_C$ | Bending stiffness $R_J$ |
| | (g) | (mm) | (g/mm) | (mm) | (mm) | (mm) | ($10^{10}$N·mm$^2$) |
| Example 1 | 1,507 | 110 | 6 | 65 | 2 | 50 | 18 |
| Example 2 | 1,500 | 100 | 6 | 65 | 2 | 50 | 18 |
| Example 3 | 1,798 | 110 | 6 | 65 | 2 | 100 | 18 |
| Comparative Example 1 | 2,476 | 75 | 10 | 68 | 3-4 | 42 | 22 |
| Comparative Example 2 | 5,600 | 135 | 6 | 65 | 2 | 50 | 18 |

## TABLE 3
## Specifications of Fitting (Yoke)

| | Fitting (yoke) | |
|---|---|---|
| | Total weight (g) | Length from supporting end to the end of pipe (mm) |
| Example 1 | 1,385 | 70 |
| Example 2 | 1,385 | 70 |
| Example 3 | 1,639 | 70 |
| Comparative Example 1 | 875 | 30 |
| Comparative Example 2 | 1,083 | 57 |

## TABLE 4
## Parameters

| | $W_J/W_P$ [1] | $A_J/A_P$ [2] | $L_P/L_J$ [3] | $L_C/D_J$ [4] | $R_J/R_P$ [5] |
|---|---|---|---|---|---|
| Example 1 | 1.2 | 4 | 8 | 50/65 | 4 |
| Example 2 | 1.3 | 4 | 8 | 50/65 | 6 |
| Example 3 | 1.4 | 4 | 8 | 100/65 | 4 |
| Comparative Example 1 | 1.8 | 11 | 20 | 42/68 | 5 |
| Comparative Example 2 | 3.6 | 4 | 8 | 50/65 | 3 |

Note:

(1) $W_J/W_P$:  Ratio of the weight of fittings ($W_J$) to the weight of FRP pipe ($W_P$)

(2) $A_J/A_P$: Ratio of the weight per unit length in the axial direction of the connecting portion of fitting ($A_J$) to the cylindrical portion of the FRP pipe ($A_P$)

(3) $L_P/L_J$: Ratio of the length of the FRP pipe ($L_P$) to the length from the supporting end of the joint of the fitting to the end of the FRP pipe ($L_J$)

(4) $L_C/D_J$: Ratio of the length of the connecting portion between the fitting and the FRP pipe ($L_C$) to the inside diameter of the connecting portion of the fitting ($D_J$)

(5) $R_J/R_P$: Ratio of the sum of the bending stiffness of the connecting portions between the FRP pipe and the fitting in the axial direction ($R_J$) to the bending stiffness of the cylindrical portion of the FRP pipe ($R_P$)

The FRP drive shaft of the present invention, which satisfies the requirements specified herein, has the advantage that as the rotational speed of the shaft increases, the amplitude of its vibrations, or the displacement amplitude of vibrations in bending mode, will hardly change or, in most cases, decrease gradually.

## Claims

1. A drive shaft comprising a fiber-reinforced plastics pipe (1) and two fittings (2,3) connected to each end thereof, wherein the ratio ($W_J/W_P$) of the weight ($W_J$) of at least one of said fittings (2,3) to the weight ($W_P$) of said pipe (1) is 2 or less, and the ratio ($A_J/A_P$) of the weight per unit length in the axial direction ($A_J$) of the connecting portion (4) of at least one of said fittings (2,3) to the weight per unit length in the axial direction ($A_P$) of the cylindrical portion of said pipe (1) is from 2 to 8.

2. A shaft as claimed in claim 1, wherein the ratio ($W_J/W_P$) is 1.5 or less.

3. A shaft as claimed in claim 1 or 2, wherein the ratio ($A_J/A_P$) is from 2 to 6.

4. A shaft as claimed in claim 1, 2 or 3, wherein the ratio ($L_P/L_J$) of the length ($L_P$) of the said pipe (1) to the length ($L_J$) from the supporting end (8) of the joint (7) of at least one of the said fittings (2,3) to the end of said pipe (1) is from 3 to 10.

5. A shaft as claimed in claim 4, wherein the ratio ($L_P/L_J$) is from 6 to 10.

6. A shaft as claimed in any preceding claim, wherein the ratio ($L_C/D_J$) of the length of the connecting portion ($L_C$) between said fitting (2,3) and said pipe (1) to the inside diameter ($D_J$) of the connecting portion (4) of said fitting (2,3) is 1 or less.

7. A shaft as claimed in any preceding claim, wherein the ratio ($R_J/R_P$) of the sum of the bending stiffness of the connecting portions between said pipe (1) and said fittings (2,3) in the axial direction ($R_J$) to the bending stiffness of the cylindrical portion of the pipe (1) in the axial direction ($R_P$) is at least 3.

8. A shaft as claimed in any preceding claim, wherein the connecting portion (4) of said fittings (2,3) has a circular, elliptical or regular polygonal cross-section.

9. A shaft as claimed in any preceding claim, wherein one of said fittings (2,3) connected to said pipe (1) is a metal yoke and the other fitting (2,3) is a stub shaft or a rubber coupling.

Fig. 1.

Fig.2.

DEFLECTION OF SHAFT (mm)

ROTATIONAL SPEED OF DRIVE SHAFT ($\times 10^3$ RPM)

EP 0 474 441 A2